# EUROPÄISCHE PATENTSCHRIFT

(11) **EP 1 398 260 B1**
(45) Veröffentlichungstag und Bekanntmachung des Hinweises auf die Patenterteilung: **02.12.2009**
(21) Anmeldenummer: 03018985.6
(22) Anmeldetag: 21.08.2003
(51) Int. Cl.: B62K 27/00

(54) **Rahmen für einen Fahrradanhänger**
Frame for bicycle trailer
Cadre pour remorque de bicyclette

(30) Priorität: 11.09.2002 DE 10242438
(43) Veröffentlichungstag der Anmeldung: 17.03.2004
(73) Patentinhaber: "Zwei plus zwei" Marketing GmbH, 50672 Köln (DE)
(72) Erfinder: Sutherland, Scott c/o MaxCarver Design Inc., Hood River, Oregon 97031 (US)
(74) Vertreter: Stute, Ivo Peter

(56) Entgegenhaltungen:
- CA-A1- 2 084 101
- US-A- 5 259 634
- US-A- 5 599 033
- US-A- 5 921 571
- US-A- 5 979 921
- US-A- 6 056 306
- US-A1- 2002 074 764

## Beschreibung

Die Erfindung betrifft einen Rahmen für einen Fahrradanhänger gemäß dem Oberbegriff des Anspruchs 1.

Fahrradanhänger mit Fahrgastzelle werden als Alternative zu Fahrradkindersitzen, die auf dem Gepäckträger oder dem oberen Rohr eines Fahrradrahmens montiert werden, immer beliebter, da Kinder darin wesentlich besser geschützt sind.

Die Fahrradanhänger müssen verschiedenen Anforderungsprofilen gerecht werden. Zunächst müssen sie eine stabile und steife Fahrgastzelle haben, damit das transportierte Kind bei Unfällen ausreichend geschützt ist. Auch muss sichergestellt sein, dass das Kind bei Unfällen nicht ohne weiteres aus dem Sitz heraus geschleudert werden kann. Des weiteren sollte der Fahrradrahmen leicht sein, um das Ziehen des Anhängers so weit wie möglich zu erleichtern. Schließlich sollte er platzsparend zu verstauen sein.

Der Rahmen eines solchen Fahrradanhängers weist im wesentlichen vier Grundkomponenten auf, nämlich ein festes, die Achse bzw. die Räder und die Deichsel tragendes Fahrgestell, das den unteren Rahmen einer Fahrgastzelle bildet, einen faltbaren Rahmenaufbau, welcher die Vorder-, Ober- und Rückseite der Fahrgastzelle bildet, einen zwischen dem oberen Scheitelpunkt des faltbaren Aufbaurahmens und dem unteren Rahmen eingespannten Tuchsitz, sowie eine aus Textilbahnen bzw. Kunststoffflächen bestehende Bespannung, welche die äußere Hülle des Anhängers bildet.

Diese Bespannung dient im wesentlichen dem Wetterschutz und verhindert, daß die im Anhänger sitzenden Kinder in drehende Teile wie beispielsweise die Laufräder eingreifen oder mit den Füßen beim Fahren Kontakt mit dem Fahrbahnuntergrund haben können. Es besteht eine Öffnung zum Einstieg von vorne, die durch ein mitgeliefertes separates Verdeck gegen Wind, Sonne und Regen verschlossen werden kann. Auf der Rückseite des Anhängers ist ebenfalls eine verschließbare Öffnung vorhanden, um den zwischen Sitztuch und Rückenwand des Anhängers entstehenden Stauraum zur Beladung und Entladung nutzen und/oder verschließen zu können.

Der Sitz wird in aller Regel durch im Innenraum eingespannte Textilbahnen gebildet, welche üblicherweise von der äußeren Bespannung getrennt sind, um ein Zusammenfalten des Fahrradanhängers zu ermöglichen. Dazu wird die Sitzfläche meist an ihren vier Eckpunkten parallel zum unteren Rahmen an diesem direkt oder mittels Gurten befestigt. Die Rückenlehne, deren Unterkante fest mit der Rückseite der Sitzfläche vernäht ist, wird mindestens an den beiden oberen Enden am Scheitelpunkt des Aufbaurahmens, häufig an einem oberen Querrohr, vertikal eingespannt. An der Rückenlehne sind dann die Schultergurte eines Rückhaltesystems aufgebracht, die das bzw. die Kinder im Falle eines Aufpralls oder des Umkippens des Anhängers vor dem Herausfallen schützen sollen.

Ein typischer Fahrradanhänger nach dem Oberbegriff des Anspruchs 1 ist beispielsweise aus der US 5,979,921 bekannt.

Ein wesentlicher Nachteil dieser Ausführungsform besteht darin, daß die seitlichen Ränder der Rückenlehne nicht mit dem Rahmen verankert werden können, weil sonst die Faltbarkeit nicht mehr gewährleistet ist. Durch diese fehlende Verankerung besteht die Gefahr, daß sich das an der Rückenlehne verankerte Rückhaltesystem mit der Rückenlehne und dem Kind bei einem Aufprall oder Umkippen zusammen mit der Rückwand entweder zu weit nach vorne oder zu weit seitlich bewegen kann und ein wesentlicher Teil der Wirkung des Rückhaltesystems damit verloren geht. Dieser Effekt wird noch dadurch verstärkt, daß zur Gewinnung größerer Schulterbreiten in den oben beschriebenen Fahrzeugen die Bespannung im Schulterbereich durch einen zusätzlichen Hilfsrahmen weiter seitlich nach außen gedehnt wird, die vertikal verlaufenden Ränder der Rückenlehne des Sitztuches aber gerade bleiben. Hierdurch entsteht im Schulterbereich ein Spalt zwischen den Rändern der Rückenlehne und der äußeren Bespannung, durch die beispielsweise im Falle eines Unfalls auch Ladegut aus dem Gepäckraum in den Fahrgastraum rutschen und zu Verletzungen der Insassen führen könnte.

Typische Fahrradanhänger dieser Art sind die Modelle Cabriolet oder Chauffeur der kanadischen Firma Chariot.

Der Erfindung liegt daher die Aufgabe zugrunde, einen Rahmen der eingangs genannten Art zu schaffen, bei dem die vorgenannten Nachteile vermieden werden können.

Diese Aufgabe wird durch mindestens ein an der Rückseite des Rahmens angeordnetes, nach vorn auskragendes und in Höhe des Schulterbereichs der Fahrgastzelle wirkendes Spannelement gelöst.

Der Grundgedanke der Erfindung besteht darin, an der Rückseite des Rahmens ein Rahmenelement vorzusehen, mit dem auf den Innenraum der Fahrgastzelle zur Verbesserung der Sicherheit und/oder der ergonomischen Eigenschaften eingewirkt werden kann. Dabei wird unter Wirken im Schulterbereich hier und im Folgenden nicht nur verstanden, daß das Spannelement direkt in den Schulterbereich der Fahrgastzelle eingreift, sondern auch, daß das Spannelement aus einer Wirkposition außerhalb des Schulterbereichs eine Wirkung im Schulterbereich der Fahrgastzelle entfaltet. Unter Schulterbereich der Fahrgastzelle wird in diesem Zusammenhang der für die Schultern der Insassen vorgesehene Raum verstanden.

Das Spannelement kann insbesondere so ausgestaltet sein, daß es die Rückenlehne des Sitzes stabilisiert und/oder so, daß es mindestens eine in den Rahmen eingespannte Seitenwand ausstellt, also über Druck auf die Innenseite der Seitenwand ein Ausbeulen der Seitenwand nach außen bewirkt.

Die stabilisierende Wirkung des verschwenkbaren Spannelements kann insbesondere in zwei Richtungen erfolgen, nämlich zum einen vertikal, wobei vertikale Zugkräfte auf die Rückenlehne beispielsweise bei geeigneter Positionierung des Spannelements bereits beim Auffalten der Fahrgastzelle aufgebracht werden können, so daß die Rückenlehne gestrafft wird. Darüber hinaus kann eine Straffung der Rückenlehne über ein oder mehrere Spannelemente auch in horizontaler Richtung erfolgen. Hierdurch ist es möglich, die Rückenlehne des Sitzes in Höhe des Schulterbereiches rahmenfest zu fixieren, so daß bei einem Aufprall oder Stoß auftretende Kräfte vom Sitz wesentlich direkter auf den Rahmen übertragen werden.

Zusätzlich dazu wird über des Ausstellen der Seitenwände ein ergonomisch günstigeres Innenraumdesign möglich, da der Raum für den oder die Insassen im Schulterbereich breiter wird.

Insbesondere ergibt sich aus der Kombination der Wirkweisen des oder der Spannelemente die Möglichkeit, gleichzeitig einen im Schulterbereich verbreiterten Sitz zu stabilisieren und eine oder beide Seitenwände im Schulterbereich auszustellen. Dabei kann gleichermaßen auf einen die Rückenlehne stabilisierenden Hilfsrahmen oder die Seitenwände ausstellende Hilfsrahmen verzichtet werden, die das Zusammenfalten der Fahrgastzelle behindern oder gar unmöglich machen würden.

In bevorzugter Ausgestaltung steht mindestens ein Teil, insbesondere das vordere Ende, des Spannelements zum Ausstellen der Seitenwand aus der von den Rahmenelementen zum Einspannen der Seitenwand aufgespannten Fläche heraus. In anderer bevorzugter Ausgestaltung ist das Spannelement an seinem vorderen Ende scheibenartig ausgebildet, damit eine über das vordere Ende des Spannelements ausgestellte Seitenwand flächig belastet wird und somit einer geringeren Beanspruchung unterliegt als bei einer punktförmigen Belastung.

In einer weiteren, besonders bevorzugten Ausbildung ist das Spannelement in einer im wesentlichen vertikalen Ebene quer zur Rahmenrückseite verschwenkbar und zum Stabilisieren der Rückenlehne und/oder zum Ausstellen der Seitenwand in mindestens einer Position fixierbar.

Unter Fixieren wird in diesem Zusammenhang und im Folgenden nicht nur ein Feststellen des Spannelements verstanden, sondern auch ein gefedertes und/oder gedämpftes Halten des Spannelements, das aus einer Ruheposition um ein bestimmtes Maß ausgelenkt werden kann und nach Auslenkung wieder in Richtung der Ruheposition zurückbewegt wird.

Zum einen wird mit der Verschwenkbarkeit des Spannelements erreicht, daß es beim Zusammenfalten des Fahrradanhängers zumindest weitestgehend in die Ebene der Rahmenrückseite verschwenkt werden kann. Zum anderen wird durch die Verschwenk- und Fixierbarkeit eines auf die Rückenlehne des Sitzes wirkenden Spannelements möglich, die auf die Rückenlehne wirkende vertikale Zugspannung einzustellen.

In einer bevorzugten Ausführungsform ist das Spannelement ein Bügel, der mindestens im Bereich seiner freien Enden an zwei oberen Verankerungspunkten mit den Seiten der Rücklehne verbunden ist. Der Bügel kann beispielsweise ein gerader Träger sein, der sich zwischen den Verankerungspunkten der Rückenlehne über ihre gesamte Breite erstreckt und über einen Hebelarm verschwenkbar mit der Rahmenrückseite verbunden ist. Dabei kann die Rückenlehne lediglich über die Verankerungspunkte mit den Enden des Trägers, aber beispielsweise auch teilweise oder über die gesamte Breite am Träger befestigt sein. Auch können die Enden des Trägers über die seitlichen Ränder der Rückenlehne zum Ausstellen der Seiten überstehen.

Insbesondere dann, wenn sich der Bügel nicht entlang der gesamten Breite der Rückenlehne erstreckt, ist es sinnvoll, zwischen den Verankerungspunkten der Rückenlehne einen Gurt vorzusehen, durch den die Rückenlehne zwischen den Verankerungspunkten zusätzlich stabilisiert wird. Dieser Gurt kann durch insbesondere in die sich an die Rückenlehne nach oben anschließende Rückwand eingelassene, vertikale Gurte, die zusammen mit der Rückwand an einem oberen Teil des Rahmens befestigt sind, gegen ein Durchsacken nach unten gehalten werden.

Bevorzugt ist der Bügel bei einer Rahmenrückseite mit zwei parallelen Seitenträgern um beide Seitenträger herumgeführt, wobei die freien Enden in ihrer die Rückenlehne verspannenden Position nach vorn zeigen. Hierdurch ist es möglich, die Verankerungspunkte für die Rücklehne vergleichsweise weit nach außen zu legen, ohne hierbei durch die Seitenträger beschränkt zu sein. Im Ergebnis kann damit der Sitzraum insbesondere im oberen Bereich der Rückenlehne vergrößert werden. Hinzu kommt eine Erhöhung der Steifigkeit der Rahmenrückseite, die allerdings grundsätzlich unabhängig davon ist, ob der Bügel um die Seitenträger herum oder zwischen den Seitenträgern geführt wird. Darüber hinaus bietet der entlang der Seite der Fahrgastzelle geführte Bügel einen Seitenaufprallschutz für den oder die Insassen.

Insbesondere in dem Fall, dass die Rahmenrückseite entgegen der Neigung der Rückwand nach vorne geneigt ist, entsteht im Bereich des Bodens des Fahrradanhängers ein vergleichsweise großer, nutzbarer Raum, der umso größer wird, je weiter der Bügel hinter der Rückseite auskragt. Gerade dann kann der Bügel bevorzugt den oberen Rand eines beutelartigen Packraums bilden, wobei insbesondere die Seitenwände und/oder die Rückwand des Packraums mindestens aus einer zwischen dem Bügel und dem Boden des Fahrradanhängers gehaltenen Stoffbahn bestehen bzw. besteht und die Vorderseite des Packraums beispielsweise die Rückenlehne bildet, oder aber der Packraum durch einen von der Rückenlehne unabhängigen Beutel gebildet wird.

Wie bereits zuvor erwähnt, kann mindestens ein elastisches Element vorgesehen sein, das den auf das Spannelement beim Verspannen der Rücklehne wirkenden Zugkräften entgegenwirkt. Der Vorteil bei einer solchen Ausführungsform besteht darin, dass die Rückenlehne aktiv gefedert ist, so dass Stöße wesentlich besser abgefedert werden können als bei einer rein passiven Abfederung von Stößen durch eine Polsterung der Sitze. Als elastisches Element kommt vorzugsweise ein Gurt in Betracht, der bevorzugt gute Dämpfungseigenschaften hat. Um die vertikale Verspannung der Rücksitzlehne variieren zu können, ist die Länge eines solchen Gurtes vorzugsweise einstellbar.

In einer anderen Ausgestaltung der Erfindung ist ein Anschlag zum Fixieren des Spannelements vorgesehen. Dieser Anschlag ist so angeordnet, dass das Spannelement beim Aufrichten eines zusammengefalteten Fahrradanhängers den dabei durch die Rückenlehne wirkenden Zugkräften durch Verschwenken nur solange nachgeben kann, bis der Anschlagpunkt erreicht ist, wobei dann die Rückenlehne bei vollständig aufgerichtetem Rahmen ausreichend durch das Spannelement stabilisiert ist. Der Anschlag kann auch aus einem federnd und dämpfend wirkenden Material bestehen, um den Sitzkomfort zu erhöhen.

Wenn der Sitz als Doppelsitz ausgebildet ist, kann zur Stabilisierung des Sitzes ein mittlerer, oberer Verankerungspunkt an der Rückenlehne vorgesehen sein, der beispielsweise über einen mit einem oberen Teil des Rahmens in Verbindung stehenden Gurt verspannt wird. Darüber hinaus kann zur Stabilisierung des Doppelsitzes zwischen seinen Sitzplätzen eine Zwischenwand angeordnet sein, die mit der Rückenlehne und der Sitzfläche des Doppelsitzes verbunden ist. Durch die Verbindung mit der Sitzfläche kann insbesondere verhindert werden, dass sich die Sitzfläche in ihrer Mitte nach unten ausbeult, wodurch zwei nebeneinander sitzende Kinder beide in die Mitte rutschen würden.

Im Folgenden wird die Erfindung anhand einer Figur, die ein bevorzugtes Ausführungsbeispiel zeigt, näher erläutert.

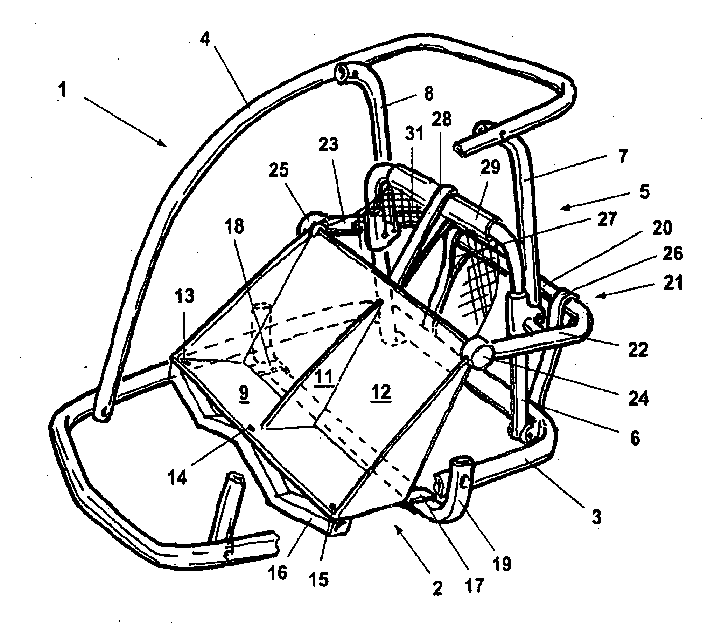

Die Figur zeigt einen Rahmen eines Fahrradanhängers mit einer faltbaren Fahrgastzelle **1** und einem darin angeordneten, faltbaren Sitz **2**. Der Rahmen weist ein Fahrgestell **3** auf, das die Deichsel trägt und an dem in herkömmlicher Weise die Räder aufgehängt sind, die aus Gründen der Übersichtlichkeit nicht dargestellt sind. Ein Rahmendach **4**, das die Vorder- und Oberseite der Fahrgastzelle bildet, ist mit dem vorderen Ende des Fahrgestells gelenkig verbunden. Die Rahmenrückseite **5** weist ein erstes, U-förmiges Rahmenteil **6** auf, dessen freie Enden am Fahrgestell **3** gelenkig gelagert sind. An beiden Seiten des Rahmenteils **6** sind im oberen, in Fahrtrichtung rückwärtigen Bereich nach oben gerichtete Seitenträger **7, 8** angelenkt, deren obere Enden mit dem Rahmenprofil des Rahmendachs **4** gelenkig verbunden sind. In ihrer nach oben gerichteten Position sind die Seitenträger **7, 8** feststellbar. Mit dieser Anordnung ist es möglich, das U-förmige Rahmenteil **6** und die Seitenträger **7, 8** sowie das Rahmendach **4** über dem Fahrgestell zusammenzufalten, ohne dass hierfür eine Gelenkverbindung gelöst werden muss.

Der Sitz **2** ist als Doppelsitz ausgebildet mit einer Sitzfläche **9**, einer vertikalen, die Sitzfläche **9** in zwei Hälften aufteilende Trennwand **11** sowie einer Rückenlehne **12.**

Die Vorderkante der Sitzfläche **9** ist an Verankerungspunkten **13, 14, 15,** die seitlich und in der Mitte der Vorderkante vorgesehen sind, mit einem vorderen Querträger **16** des Fahrgestells **3** verbunden. An der Rückseite der Sitzfläche **9** sind Schlaufen **17, 18** vorgesehen, mit denen sie an einem hinteren Querträger **19** befestigt ist. Beide Querträger **16, 19** haben neben der Verankerungsfunktion auch eine das Fahrgestell **3** versteifende Funktion, wobei die Enden des hinteren Trägers **19,** die im vorliegenden Ausführungsbeispiel hochgebogen sind und über den Fahrgestellrahmen überstehen, darüber hinaus für die Radaufhängung verwendet werden können.

Auf Höhe der gelenkigen Verbindung zwischen dem U-förmigen Rahmenteil **6** mit den Seitenträgern **7, 8** ist am Rahmenteil **6** ein Bügel **21** gelenkig angeordnet, dessen Schwenkachse parallel zur Schwenkachse der Seitenträger **7, 8** verläuft. Der Bügel ist als U ausgebildet, das in der dargestellten Position nach vorn offen ist und die Rahmenrückseite **5** mit den freien Schenkeln **22, 23** einfasst. Der Bügel **21** ist dabei so breit, dass seine freien Schenkel **22, 23** außerhalb der von den seitlichen Rahmenteilen der Fahrgastzelle **1** aufgespannten Seitenflächen verläuft, so dass eine Seitenwand durch den Bügel **21** ausgestellt wird.

An den Enden der freien Schenkel sind Verbindungsknoten **24, 25** vorgesehen, die mit Verankerungspunkten an den oberen Ecken der Rückenlehne **12** in Eingriff stehen. Die Art der Verbindung zwischen Bügel **21** und Rückenlehne **12** kann dabei auf vielfältige Weise erfolgen. So können an den oberen Ecken der Rückenlehne **12** Schlaufen vorgesehen sein, die mit den Verbindungsknoten **24, 25** zusammenwirken. Oder es sind in der Rückenlehne **12** verstärkte Ösen vorgesehen, die mit Stiften an den Verbindungsknoten **24, 25** zusammenwirken. Eine andere Verbindunsgvariante besteht darin, dass die Verbindungsknoten **24, 25** zweischalig und mit innen verlaufenden Rillen ausgebildet sind, die mit paspelierten Nähten der Rückenlehne **12** zusammenwirken.

Die Rückenlehne **12** wird von dem Bügel **21** durch elastische Gurte **26, 27** vertikal gespannt. Die Gurte **26, 27** sind auf der einen Seite am Fahrgestell **3** verankert und auf der anderen Seite mit dem die freien Schenkel **22, 23** verbindenden Steg **20** des Bügels **21** verbunden und auf Zug belastet. Sie haben nicht nur eine die Rückenlehne **12** stabilisierende Wirkung, sondern auch eine federnde und dämpfende Wirkung, so dass Stöße und Vibrationen während der Fahrt abgefedert werden können. Anstelle einer elastischen Fixierung des Bügels **21** kann auch ein Verschluss vorgesehen sein, mit dem der Bügel fest in seiner Position arretierbar ist, beispielsweise durch eine einfach Bolzenverbindung.

Die Oberkante der Rückenlehne **12** wird in ihrer Mitte durch einen zusätzlichen elastischen Gurt **28** verspannt, der mit der oberen Querstrebe **29** des U-förmigen Rahmenteils **6** der Rahmenrückseite **5** in Eingriff steht, wobei die Querstrebe **29** oberhalb der Rückenlehne **12** angeordnet ist und im wesentlichen in der Ebene der Rücklehne **12** liegt. Darüber hinaus ist die Oberkante der Rückenlehne mit einer netzartigen Textilbahn **31** vernäht, deren gegenüberliegende Seite an der Querstrebe **29** befestigt ist.

Durch die horizontale Anordnung des Bügels **21** kommt es im Bereich der Rahmenrückseite zu einer zusätzlichen Aussackung einer hinteren, hier nicht dargestellten Bespannung, die von den oberen Gelenkpunkten der Seitenträger **7, 8** über den Steg **20** des Bügels **21** zur hinteren Kante des Rahmens **3** verläuft. Wenn die Bespannung oberhalb des Stegs **20** des Bügels **21** geöffnet ist, um einen Zugang zu dem hinter dem Sitz gebildeten Laderaum zu erhalten, könnten die elastischen Gurte **25, 26** ersetzt werden, sofern der Steg **20** fest mit der zum unteren Rahmen **3** hin verlaufenden Bespannung vernäht wird.

Die Seitenwände sind aus Gründen der besseren Übersicht nicht dargestellt. Sie werden in üblicher Weise an den Rahmenteilen, beispielsweise mit Klettverschlüssen, befestigt.

## Patentansprüche

1. Rahmen für einen Fahrradanhänger mit einem Fahrgestell (3), einer darauf angeordneten, faltbaren Fahrgastzelle (1), einem in der Fahrgastzelle (4) angeordneten, faltbaren Sitz (2) und mindestens einer an der Fahrgastzelle (4) angeordneten Seitenwand, der eine Rahmenrückseite (5) mit zwei parallelen und/oder nach oben gerichteten Seitenträgem (6, 7, 8) aufweist, **gekennzeichnet durch** mindestens ein an den Seitenträgern (6, 7, 8) in Höhe des Schulterbereichs der Fahrgastzelle angeordnetes, nach vom auskragendes und auf die Innenseite der Seitenwand wirkendes Spannelement (22,23).

2. Rahmen nach Anspruch 1, **dadurch gekennzeichnet, dass** das Spannelement die Rückenlehne (12) des Sitzes (2) stabilisiert.

3. Rahmen nach Anspruch 1 oder 2, **dadurch gekennzeichnet, dass** das Spannelement (22, 23) mindestens eine in den Rahmen eingespannte Seitenwand ausstellt.

4. Rahmen nach Anspruch 3, **dadurch gekennzeichnet, dass** mindestens ein Teil, insbesondere das vordere Ende, des Spannelements, aus der von den Rahmenelementen zum Einspannen der Seitenwand aufgespannten Fläche heraussteht.

5. Rahmen nach einem der Ansprüche 1 bis 4, **dadurch gekennzeichnet, dass** das Spannelement an seinem vorderen Ende scheibenartig ausgebildet ist.

6. Rahmen nach einem der Ansprüche 1 bis 5, **dadurch gekennzeichnet, dass** das Spannelement in einer im wesentlichen vertikalen Ebene quer zur Rahmenrückseite verschwenkbar und zum Stabilisieren der Rückenlehne (12) des Sitzes (2) und/oder zum Ausstellen der Seitenwand in mindestens einer Position fixierbar ist.

7. Rahmen nach einem der Ansprüche 1 bis 6, **dadurch gekennzeichnet, dass** das Spannelement ein Bügel (21) ist, der mindestens im Bereich seiner freien Enden an zwei oberen Verankerungspunkten mit den Seiten der Rücklehne (12) verbunden ist.

8. Rahmen nach Anspruch 7, **gekennzeichnet durch** einen zwischen den seitlichen Verankerungspunkten eingelassenen Gurt.

9. Rahmen nach Anspruch 7 oder 8, **dadurch gekennzeichnet, dass** der Bügel (21) um beide Seitenträger (6, 7, 8) herumgeführt ist, wobei die freien Enden in ihrer die Rückenlehne (12) verspannenden und/oder die Seitenwände ausstellenden Position nach vorn zeigen.

10. Rahmen nach einem der Ansprüche 1 bis 9, **dadurch gekennzeichnet, dass** der Bügel (21) den oberen Rand eines beutelartigen Packraums bildet.

11. Rahmen nach Anspruch 10, **dadurch gekennzeichnet, dass** die Seitenwände und/oder die Rückwand des Packraums mindestens aus einer zwischen dem Bügel und dem Boden des Fahrradanhängers gehaltenen Stoffbahn bestehen.

12. Rahmen nach Anspruch 10 oder 11, **dadurch gekennzeichnet, dass** die Vorderseite des Packraums die Rückenlehne (12) ist.

13. Rahmen nach einem der Ansprüche 1 bis 12, **gekennzeichnet durch** mindestens ein elastisches Element (26, 27), das den auf das Spannelement (21) beim Verspannen der Rücklehne (12) wirkenden Zugkräfte entgegenwirkt.

14. Rahmen nach Anspruch 13, **dadurch gekennzeichnet, dass** das elastische Element (26, 27) ein elastischer Gurt ist.

15. Rahmen nach Anspruch 14, **dadurch gekennzeichnet, dass** die Länge des Gurtes (26, 27) einstellbar ist.

16. Rahmen nach einem der Ansprüche 1 bis 15, **gekennzeichnet durch** einen Anschlag zum Fixieren des Spannelements (21).

17. Rahmen nach einem der Ansprüche 1 bis 16, **dadurch gekennzeichnet, dass** die Seitenträger (6, 7, 8) um eine Schwenkachse herum faltbar sind, und die Schwenkachse des Spannelements (21) mit der Schwenkachse der Seitenträger (6, 7, 8) fluchtet.

18. Rahmen nach einem der Ansprüche 1 bis 17, **dadurch gekennzeichnet, dass** der Sitz (2) als Doppelsitz ausgebildet ist, wobei ein mittlerer, oberer Verankerungspunkt an der Rückenlehne (12) des Doppelsitzes vorgesehen ist, der auch zum Verspannen der Rückenlehne (12) verwendet wird.

19. Rahmen nach Anspruch 18, **dadurch gekennzeichnet, dass** der mittlere, obere Verankerungspunkt über einen mit einem oberen Teil des Rahmens in Verbindung stehenden Gurt (28) verspannt wird.

20. Rahmen nach Anspruch 18 oder 19, **dadurch gekennzeichnet, dass** zwischen den Sitzplätzen des Doppelsitzes eine Zwischenwand (11) angeordnet ist, die mit der Rückenlehne (12) und der Sitzfläche (9) des Doppelsitzes verbunden ist.

## Claims

1. Frame for a bicycle trailer with a chassis (3), a foldable passenger cell (1) arranged thereon, a foldable seat (2) arranged in the passenger cell (1) and at least one side wall which is arranged on the passenger cell (1), the frame comprising a frame rear side (5) with two parallel and/or upwardly directed side supports (6, 7, 8), **characterized by** at least one tensioning element (22, 23) which is arranged on the side supports (6, 7, 8) level with the shoulder region of the passenger cell, projects forwards and acts on the inner side of the side wall.

2. Frame according to Claim 1, **characterized in that** the tensioning element stabilizes the backrest (12) of the seat (2).

3. Frame according to Claim 1 or 2, **characterized in that** the tensioning element (22, 23) pushes out at least one side wall which is clamped into the frame.

4. Frame according to Claim 3, **characterized in that** at least one part, in particular the front end, of the tensioning element protrudes from the surface defined by the frame elements for the clamping of the side wall.

5. Frame according to one of Claims 1 to 4, **characterized in that** the tensioning element is designed in the manner of a disc at its front end.

6. Frame according to one of Claims 1 to 5, **characterized in that** the tensioning element can be pivoted in a substantially vertical plane transversely with respect to the frame rear side and can be fixed in at least one position in order to stabilize the backrest (12) of the seat (2) and/or to push out the side wall.

7. Frame according to one of Claims 1 to 6, **characterized in that** the tensioning element is a yoke (21) which is connected at least in the region of its free ends to the sides of the backrest (12) at two upper anchoring points.

8. Frame according to Claim 7, **characterized by** a strap attached between the lateral anchoring points.

9. Frame according to Claim 7 or 8, **characterized in that** the yoke (21) is guided around the two side supports (6, 7, 8), with the free ends pointing forwards in their position bracing the backrest (12) and/or pushing out the side walls.

10. Frame according to one of Claims 1 to 9, **characterized in that** the yoke (21) forms the upper edge of a bag-like storage space.

11. Frame according to Claim 10, **characterized in that** the side walls and/or the rear wall of the storage space consist of at least one web of fabric held between the yoke and the floor of the bicycle trailer.

12. Frame according to Claim 10 or 11, **characterized in that** the front side of the storage space is the backrest (12).

13. Frame according to one of Claims 1 to 12, **characterized by** at least one elastic element (26, 27) which counteracts the tensile forces acting on the tensioning element (21) during the bracing of the backrest (12).

14. Frame according to Claim 13, **characterized in that** the elastic element (26, 27) is an elastic strap.

15. Frame according to Claim 14, **characterized in that** the length of the strap (26, 27) can be adjusted.

16. Frame according to one of Claims 1 to 15, **characterized by** a stop for fixing the tensioning element (21).

17. Frame according to one of Claims 1 to 16, **characterized in that** the side supports (6, 7, 8) can be folded around a pivot axis, and the pivot axis of the tensioning element (21) is aligned with the pivot axis of the side supports (6, 7, 8).

18. Frame according to one of Claims 1 to 17, **characterized in that** the seat (2) is designed as a double seat, with a central, upper anchoring point being provided on the backrest (12) of the double seat, said anchoring point also being used for the bracing of the backrest (12).

19. Frame according to Claim 18, **characterized in that** the central, upper anchoring point is braced via a strap (28) which is connected to an upper part of the frame.

20. Frame according to Claim 18 or 19, **characterized in that** an intermediate wall (11) which is connected to the backrest (12) and to the seat surface (9) of the double seat is arranged between the seats of the double seat.

## Revendications

1. Cadre pour une remorque de bicyclette, avec un châssis (3), une cellule de passager repliable (1) disposée sur ce châssis, un siège repliable (2) disposé dans la cellule de passager (4) et au moins une paroi latérale disposée sur la cellule de passager (4), le cadre présentant un côté arrière de cadre (5) avec deux barres latérales parallèles et/ou dirigées vers le haut (6, 7, 8), **caractérisé par** au moins un élément tendeur (22, 23) disposé sur les barres latérales (6, 7, 8) à hauteur de la région pour les épaules de la cellule de passager, faisant saillie vers l'avant et agissant sur la face intérieure de la paroi latérale.

2. Cadre selon la revendication 1, **caractérisé en ce que** l'élément tendeur stabilise le dossier (12) du siège (2).

3. Cadre selon la revendication 1 ou 2, **caractérisé en ce que** l'élément tendeur (22, 23) déploie au moins une paroi latérale tendue dans le cadre.

4. Cadre selon la revendication 3, **caractérisé en ce qu'**au moins une partie, en particulier l'extrémité avant, de l'élément tendeur dépasse de la surface définie par les éléments de cadre pour tendre la paroi latérale.

5. Cadre selon l'une des revendications 1 à 4, **caractérisé en ce que** l'élément tendeur est réalisé en forme de disque à son extrémité avant.

6. Cadre selon l'une des revendications 1 à 5, **caractérisé en ce que** l'élément tendeur peut être pivoté dans un plan essentiellement vertical, transversalement au côté arrière du cadre, et peut être fixé dans au moins une position afin de stabiliser le dossier (12) du siège (2) et/ou afin de déployer la paroi latérale.

7. Cadre selon l'une des revendications 1 à 6, **caractérisé en ce que** l'élément tendeur est un arceau (21) qui, au moins dans la région de ses extrémités libres, est relié aux côtés du dossier (12) en deux points d'ancrage supérieurs.

8. Cadre selon la revendication 7, **caractérisé par** une sangle mise en place entre les points d'ancrage latéraux.

9. Cadre selon la revendication 7 ou 8, **caractérisé en ce que** l'arceau (21) est amené à contourner les deux barres latérales (6, 7, 8), sachant que les extrémités libres, dans leur position tendant le dossier (12) et/ou déployant les parois latérales, sont tournées vers l'avant.

10. Cadre selon l'une des revendications 1 à 9, **caractérisé en ce que** l'arceau (21) constitue le bord supérieur d'un espace de rangement du genre sacoche.

11. Cadre selon la revendication 10, **caractérisé en ce que** les parois latérales et/ou la paroi arrière de l'espace de rangement sont constituées au moins d'une bande d'étoffe maintenue entre l'arceau et le fond de la remorque de bicyclette.

12. Cadre selon la revendication 10 ou 11, **caractérisé en ce que** le côté avant de l'espace de rangement est le dossier (12).

13. Cadre selon l'une des revendications 1 à 12, **caractérisé par** au moins un élément élastique (26, 27) qui s'oppose aux forces de traction agissant sur l'élément tendeur (21) lorsque le dossier (12) est tendu.

14. Cadre selon la revendication 13, **caractérisé en ce que** l'élément élastique (26, 27) est une sangle élastique.

15. Cadre selon la revendication 14, **caractérisé en ce que** la longueur de la sangle (26, 27) est réglable.

16. Cadre selon l'une des revendications 1 à 15, **caractérisé par** une butée pour fixer en position l'élément tendeur (21).

17. Cadre selon l'une des revendications 1 à 16, **caractérisé en ce que** les barres latérales (6, 7, 8) peuvent être repliées autour d'un axe de pivotement, et l'axe de pivotement de l'élément tendeur (21) est aligné avec l'axe de pivotement des barres latérales (6, 7, 8).

18. Cadre selon l'une des revendications 1 à 17, **caractérisé en ce que** le siège (2) est réalisé sous forme de siège double, sachant qu'un point d'ancrage supérieur central est prévu sur le dossier (12) du siège double, point qui est également utilisé pour tendre le dossier (12).

19. Cadre selon la revendication 18, **caractérisé en ce que** le point d'ancrage supérieur central est tendu au moyen d'une sangle (28) reliée à une partie supérieure du cadre.

20. Cadre selon la revendication 18 ou 19, **caractérisé en ce qu'**une paroi intermédiaire (11) est disposée entre les places assises du siège double, laquelle est reliée au dossier (12) et à l'assise (9) du siège double.
